# EUROPEAN PATENT SPECIFICATION

(11) **EP 0 976 533 B1**
(45) Date of publication and mention of the grant of the patent: **06.11.2002**
(21) Application number: 99114596.2
(22) Date of filing: 26.07.1999
(51) Int. Cl.: B29D 30/06, B29C 43/10

(54) **Method and apparatus for moulding and curing vehicle tyres**
Verfahren und Vorrichtung zum Formen und Vulkanisiern von Luftreifen
Procédé et dispositif pour le moulage et la vulcanisation de pneumatiques

(30) Priority: 31.07.1998 EP 98830473
(43) Date of publication of application: 02.02.2000
(73) Proprietor: PIRELLI PNEUMATICI Società per Azioni, 20126 Milano (IT)
(72) Inventor: Caretta, Renato, 21013 Gallarate (Varese) (IT)
(74) Representative: Tansini, Elio Fabrizio

(56) References cited:
- EP-A- 0 780 221
- EP-A- 0 822 047
- US-A- 1 328 676
- US-A- 1 798 210

## Description

The present invention relates to a method for moulding and curing tyres for vehicle wheels, comprising the features recited in the preamble of claim 1.

The present invention also relates to an apparatus for moulding and curing tyres for vehicle wheels, comprising the features recited in the preamble of claim 11.

In a tyre production cycle it is provided that, subsequently to a manufacturing process in which the different tyre components are made and/or assembled together, a moulding and curing process is carried out which aims at stabilizing the tyre structure according to a desired geometric conformation, usually characterized by a particular tread pattern.

For the purpose, the tyre is closed in a moulding cavity internally defined by a vulcanization mould and conforming in shape to the geometric configuration of the outer surfaces of the tyre to be obtained.

In one of the most widely spread moulding methods it is provided that a vulcanization bladder of elastomer material filled with steam and/or another high-temperature and high-pressure fluid should be inflated within the tyre closed in the moulding cavity. In this way, the tyre is conveniently pushed against the inner walls of the moulding cavity and stabilized to the geometric conformation imposed to it, following the molecular cross-linking undergone by the elastomer material of which it is made, due to a supply of heat transmitted by the fluid through the bladder and by the mould walls.

Also known are moulding methods in which, instead of the inflatable vulcanization bladder, a rigid toroidal support is arranged within the tyre, the shape of which matches that of the inner surface of the tyre to be obtained.

Such a method is described in the European patent EP 242 840 for example, in which a rigid toroidal support is employed for imposing the final shape and sizes to the tyre closed in the mould. In accordance with that which is described in this patent, the different coefficient of thermal expansion between the metallic toroidal support and the raw elastomer material of which the tyre is made is utilized for achieving a suitable moulding pressure.

In conclusion, the assembly of the parts forming the mould and the toroidal support defines a closed interspace in the moulding cavity, which substantially has a shape conforming to the whole geometric configuration of the tyre. In this way, both the outer surfaces and the inner surfaces of the tyre are maintained in contact with rigid portions of the moulding and curing apparatus. In other words, all the apparatus parts intended to set up the final tyre geometry are rigid parts, in contrast with the methods using the inflatable vulcanization bladder which, as known, constitutes a deformable part of the mould.

It is however to point out that, at the present state of the art, both methods, i.e. that employing the inflatable vulcanization bladder and that employing a rigid toroidal support during tyre vulcanization, have some problems.

With reference to the methods employing the inflatable bladder, it is in fact to note that the bladder deformability can easily give rise to geometric and/or structural imperfections in the tyre, due to possible distortions to which the bladder itself may be submitted, owing to an unbalanced expansion and/or to friction phenomena generated between the outer surfaces of the bladder and the inner surfaces of the raw tyre. Taking into account the fact that the bladder also has the task of locking the tyre beads against the corresponding portions of the mould, the bladder deformability makes it difficult to achieve sufficient bead-locking pressures. Therefore an undesired out-of-alignment positioning of the beads relative to the geometric axis of the tyre can occur, which will give rise to distortion of the whole tyre structure. An insufficient bead-locking pressure, in addition, can give origin to formation of burr at the beads themselves, due to escape of elastomer material between the bladder and mould, above all at the starting instants of the curing process.

The vulcanization bladder needs use of great amounts of steam, due to the requirement of filling the whole inner volume of the bladder inflated in the mould cavity, and in addition it constitutes an obstacle to heat transmission to the tyre by said steam.

On the other hand, use of a rigid toroidal support instead of the inflatable vulcanization bladder makes it necessary to carry out a very precise, and also very difficult, checking of the volumes of the material used in manufacturing the tyre.

Furthermore, it is not presently possible to impose an appropriate radial and/or circumferential expansion to the tyre, for example to achieve desired preloading effects in the reinforcing structures employed in manufacturing said tyre.

Even with the aid of the rigid toroidal support, in addition, it is somewhat difficult to obtain a correct and efficient heat transmission to the inside of the tyre.

Document US-A-1 798 210 teaches to build the tyre on a iron core. The tyre is thereafter disengaged from the iron core and a flexible rubber core is introduced into the tyre. Such a rubber core conforms to the shape of the interior of the tyre, but is somewhat smaller so as to leave a space between the core and the inner surface of the tyre. The green tyre is made to fill the mould cavity so that there will be no stretching of the cords when the casing is inflated with water, used as inflating and heating fuid.

The Applicant has envisaged the possibility of achieving important improvements in the processes for moulding and curing a tyre with the aid of a rigid toroidal support, by carrying out admission of a heating fluid and/or another fluid under pressure, in accordance with the present invention, to an interspace defined between the inner surface of the tyre and the outer surface of the toroidal support itself.

In particular, the invention relates to a method of moulding and curing tyres for vehicle wheels, characterized by the features recited in the characterizing portion of claim 1.

In more detail, the pressing step takes place concurrently with an expansion imposed to the tyre by effect of admitting fluid under pressure to the diffusion interspace.

Said radial expansion preferably involves an increase in the tyre circumference included between 1.5% and 3.5%, measured at an equatorial plane of the tyre itself.

The diffusion interspace, preferably having a size included between 3 mm and 14 mm, measured between the inner surface of the tyre and the outer surface of the toroidal support at least at one equatorial plane of the tyre itself, can be advantageously created following expansion of the tyre.

In a preferential embodiment, admission of fluid under pressure takes place through feeding channels formed in the toroidal support and opening onto the-outer surface of said support.

In addition, it is preferably provided that during admission of fluid under pressure the tyre should be sealingly engaged at its inner circumferential edges between the moulding cavity walls and the outer surface of the toroidal support, for hermetically delimiting the diffusion interspace at the inner circumferential edges of the tyre itself.

Advantageously, heat administration preferably takes place by admission of a heating fluid to said diffusion interspace.

This heating fluid may constitute, or at least may be part of the same fluid under pressure employed for carrying out the pressing step.

In accordance with a further aspect of the invention, to be utilized also independently of the presence of a rigid toroidal support, a pre-vulcanized liner is arranged on the inner surface of the tyre.

Said pre-vulcanized liner can be advantageously directly formed on the toroidal support during a preliminary step of the tyre manufacture on the toroidal support itself.

In more detail, formation of the pre-vulcanized liner preferably comprises the following steps: applying at least one layer of raw elastomer material to the outer surface of the toroidal support; supplying heat to the elastomer layer to cause a molecular cross-linking of the latter.

Heat supply to the elastomer layer can be obtained by heating the toroidal support.

Conveniently, heating of the toroidal support is at least partly obtained due to employment of the toroidal support itself in a preceding cycle for carrying out tyre moulding and curing.

In accordance with the invention, said method is put into practice by an apparatus for moulding and curing tyres for vehicle wheels, characterized by the features recited in the characterizing portion of claim 11.

In more detail, said feeding channels open into at least one interspace for diffusion of the fluid under pressure, defined between the outer surface of the toroidal support and the inner surface of the tyre being worked.

Preferably, the outer surface of the toroidal support has an extension lower than that of the inner surface of the vulcanized tyre, so that the diffusion interspace of the heating fluid is created between the outer surface of the toroidal support and the inner surface of the tyre, due to expansion of said tyre by effect of the thrust exerted thereon by the fluid under pressure.

It is also preferably provided that the toroidal support should have inner circumferential portions cooperating with inner circumferential portions of the walls of the moulding cavity for sealingly engaging the tyre at the respective inner circumferential edges of the latter.

In a preferential solution of the invention the pressurized-fluid feeding channels extend from an annular cavity provided internally of the toroidal support and susceptible of connection with at least one primary duct for feeding of fluid under pressure, associated with the vulcanization mould.

Conveniently, the toroidal support has at least one centering shank to be engaged in a centering seat arranged in the mould for fastening positioning of the toroidal support and the tyre in the moulding cavity.

Said centering shank for example extends according to a geometric axis common to said toroidal support, said tyre worked, and said moulding cavity.

Also provided may be at least one connecting duct formed along the centering shank to bring the feeding channels into fluid communication with at least one primary duct for feeding of fluid under pressure.

According to a further feature of the invention, the heating means comprises at least one conduit for sending a heating fluid to the feeding channels.

The heating fluid may comprise the same fluid under pressure admitted by the pressurized-fluid feeding means.

Further features and advantages will become more apparent from the detailed description of a preferred, non-exclusive embodiment of a method and an apparatus for moulding and curing tyres for vehicle wheels in accordance with the present invention.

This description is taken hereinafter with reference to the accompanying drawings, given by way of non-limiting example, in which:
- Fig. 1 diagrammatically shows a diametrical section of an apparatus in accordance with the invention during the step of loading a tyre being worked into a mould, arranged in an open condition;
- Fig. 2 is a fragmentary cross half-section, to an enlarged scale as compared with Fig. 1, showing the tyre in a step coinciding with, or immediately after closing of the mould;
- Fig. 3 is a cross half-section of the tyre being moulded against the mould surfaces, following admission of steam under pressure through the toroidal support.

With reference to the drawings, an apparatus for moulding and curing tyres for vehicle wheels in accordance with the present invention has been generally identified by reference numeral 1.

Apparatus 1 comprises a vulcanization mould 2 associated with a vulcanization press 3, only diagrammatically shown in that it can be made in any convenient manner as conceived by a person skilled in the art. For instance, mould 2 may be comprised of a lower mould half 2a and an upper mould half 2b in engagement with a bed 3a and a closing portion 3b of press 3, respectively.

In the example shown just as an indication, each of the lower 2a and upper 2b mould halves of mould 2 has a lower 4a and upper 4b cheek respectively, and a crown of lower 5a and upper 5b sectors.

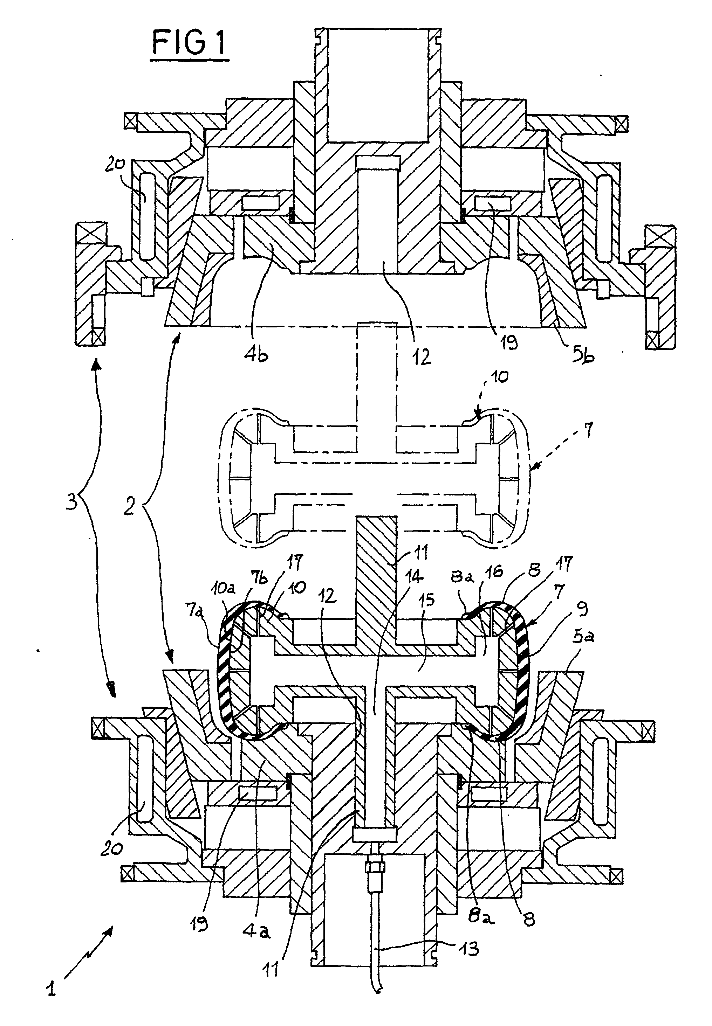

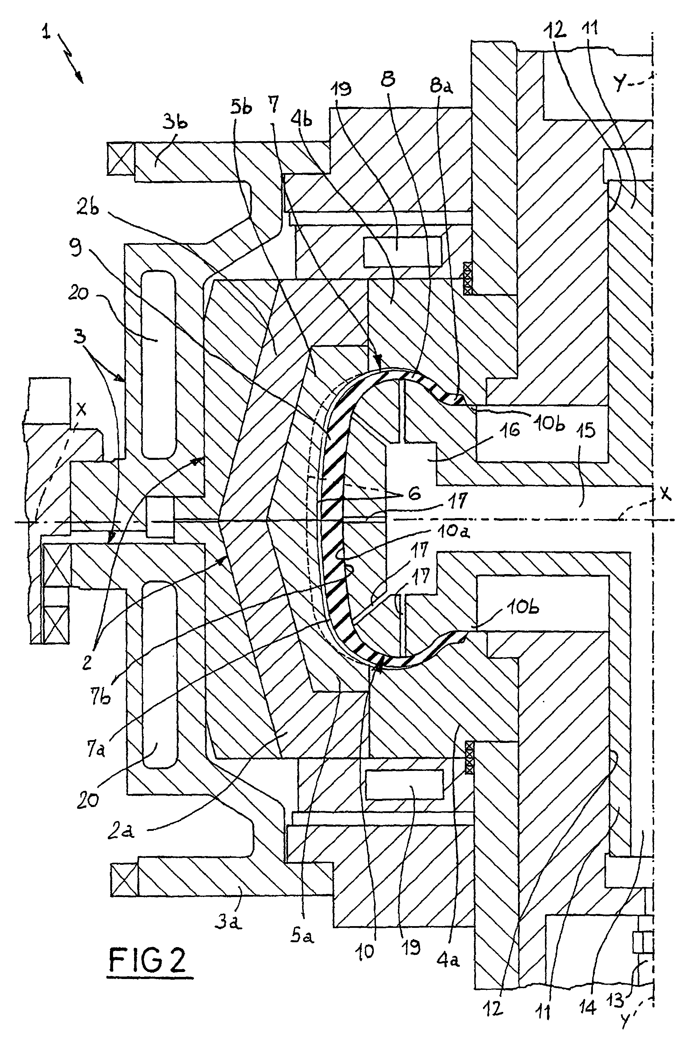

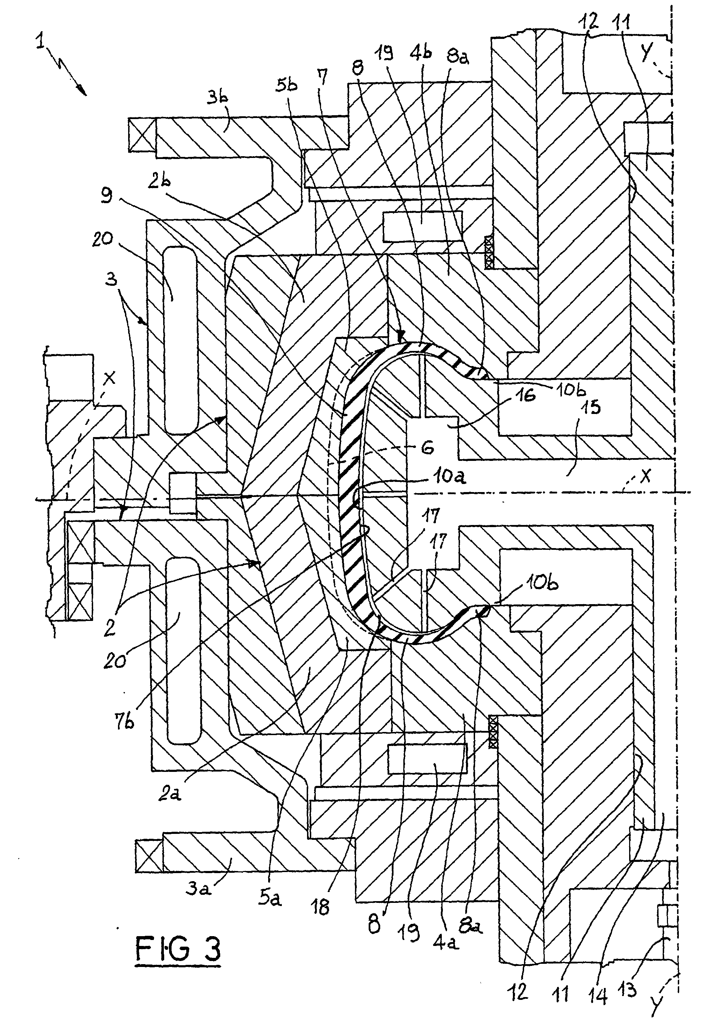

The lower 2a and upper 2b mould halves are movable relative to each other between an open condition in which they are mutually spaced apart as shown in Fig. 1, and a closed position, shown in Figs. 2 and 3,-in which they are disposed mutually close to each other for the purpose of forming a moulding cavity 6 the inner sides of which, defined by cheeks 4a, 4b and sectors 5a, 5b, reproduce the geometric conformation of the outer surface 7a of a tyre 7 to be obtained.

In more detail, cheeks 4a, 4b are intended for forming the outer surfaces of the opposite sidewalls 8 of tyre 7, whereas sectors 5a, 5b are intended for forming the so-called tread band 9 of the tyre itself, creating a series of cuts and longitudinal and/or transverse grooves therein, suitably disposed according to a desired "tread pattern".

Apparatus 1 further provides for use of at least one toroidal support 10 of metal material or another solid material, having an outer surface substantially reproducing the shape of an inner surface of tyre 7. The toroidal support 10 is conveniently made up of a collapsible drum, that is consisting of centripetally movable circumferential segments for dismantling the toroidal support itself and enabling easy removal of same from tyre 7, when working has been completed.

In accordance with the method of the invention, the raw tyre 7 is disposed on the toroidal support 10 before the latter is fitted, together with the tyre itself, into the vulcanization mould 2 arranged in an open condition.

In particular, engagement of tyre 7 on the toroidal support 10 can be conveniently obtained by directly manufacturing the tyre on the support itself. In this way the toroidal support 10 is advantageously utilized as a rigid outline for forming and/or deposition of the different components, such as carcass plies, bead-reinforcing structures, belt strips, sidewalls, and tread band for example, which components cooperate in forming the tyre itself. Further details on the modalities of forming and/or deposition of the components of tyre 7 on the toroidal support 10 can be taken from European patent applications EP 943421 and EP 928680 for example, in the name of the same Applicant.

Under this circumstance, the geometric conformation of the inner surface of the raw tyre 7 will exactly correspond to the conformation of the outer surface of the toroidal support 10.

However, as better clarified in the following, it is preferably provided that the extension of the outer surface 10a of the toroidal support 10 should be conveniently lower than the extension of the inner surface 7b of tyre 7 when vulcanization has been completed.

The toroidal support 10 is preferably provided with at least one centering shank 11 to be engaged in a centering seat 12 arranged in mould 2, for establishing a precise positioning of the toroidal support itself and the tyre 7 carried thereon, within the moulding cavity 6. In the embodiment shown, the toroidal support 10 has two centering shanks 11 extending from opposite sides according to geometric axis Y common to the toroidal support 10, the tyre 7 and the moulding cavity 6, and arranged for being fitted into corresponding centering seats 12 formed in the bed 3a and the closing portion. 3b of the vulcanization press 3, respectively.

More particularly, coupling between each centering shank 11 of the toroidal support 10 and the corresponding centering seat 12 formed in mould 2 defines, between each cheek 4a, 4b of the mould itself and the corresponding inner circumferential edge 10b of the toroidal support 10, a housing seat for an inner circumferential edge 8a of tyre 7, usually known as "bead" of the tyre 7.

Said bead seats give beads 8a a moulding of quite precise geometry and thickness, in that said moulding results from a direct coupling between the rigid surfaces of the toroidal support 10 and the surfaces of cheeks 4a, 4b of mould 2.

In addition, said bead seats ensure an absolutely steady and precise centering of tyre 7 relative to axis "Y" of the moulding cavity 6.

Preferably, the toroidal support 10 is also conveniently sized so as to have, at least at the regions corresponding to beads 8a of tyre 7, an elastically yielding structure in an axial direction, due to mutual approaching of cheeks 4a, 4b during the closing step of mould 2.

The axial deformation undergone by the toroidal support 10 at the contact regions with cheeks 4a, 4b close to the tyre beads 8a is preferably included between 0.3 and 0.5 mm, so as to generate a specific pressure included between 18 and 25 bars on the contact surfaces with the corresponding cheeks 4a, 4b. This contact pressure, during the moulding and curing step of tyre 7, prevents any escape of elastomer material between the surfaces in mutual contact of the toroidal support 10 and of cheeks 4a, 4b, thereby avoiding formation of consequent burr.

When positioning of the toroidal support 10 with tyre 7 on the lower portion 2a of mould 2 has been carried out, the mould itself is brought to its closed condition.

As can be viewed from Fig. 2, at the moment that mould 2 is closed, the walls of the moulding cavity 6 remain at a certain distance from the outer surface of tyre 7, in particular at the tread band 9 of the latter. During this step, the tread band 9 can in any case be partly penetrated by the raised portions arranged on sectors 5a, 5b so as to define said tread pattern.

Still on closure of mould 2, each of the inner circumferential edges 8a of tyre 7 is sealingly engaged between the inner circumferential portions of the toroidal support 10 and inner circumferential portions of the lower 4a and upper 4b cheeks. Tyre 7 will remain sealingly engaged in the mould in the above described manner until the moment that, at the end of the moulding and curing cycle, the mould itself will be brought again to its open condition.

When mould closure has been completed, tyre 7 is submitted to a pressing step with its outer surface 7a against the walls of the moulding cavity 6, concurrently with administration of heat, so as to cause molecular cross-linking of the elastomer material forming the tyre itself and consequent geometric and structural stabilization of the latter.

For the purpose, apparatus 1 is provided with pressing means comprising at least one primary duct 13 for feeding od a fluid under pressure, formed in bed 3a of press 2 for example, and opening into one of the centering seats 12 for sending a fluid under pressure to at least one connecting duct 14 formed along at least one of the centering shanks 11, preferably coaxially therewith.

The connecting duct 14 terminates, through appropriate branches 15 radially formed in the toroidal support 10, at an annular chamber 16 provided internally of the toroidal support itself.

Extending from the annular chamber 16, through the toroidal support 10, is a plurality of channels 17 for feeding of fluid under pressure, which open into the outer surface 10a of the toroidal support itself and are suitably distributed over the circumferential extension of said support.

The pressurized fluid fed from the primary duct 13 reaches the feeding channels 17 via the connecting duct 14, the radial branches 15 and the annular chamber 16, then opening onto the outer surface 10a of the toroidal support 10.

The pressurized fluid is thus admitted to a diffusion interspace 18 created between the outer surface 10a of the toroidal support 10 and the inner surface 7b of tyre 7, into which the feeding channels 17 open.

In a preferential solution, the diffusion interspace 18 is directly created following an expansion of tyre 7 caused by effect of the thrust exerted by the pressurized fluid.

In other words, pressing of the tyre against the walls of the moulding cavity 6 takes place concurrently with an expansion imposed to the tyre itself, until the outer surface 7a thereof is brought to completely adhere to the inner walls of the moulding cavity 6.

Alternatively, in accordance with a different embodiment, the diffusion interspace 18 is at least partly defined by a surface lowering formed on the outer surface 10a of the toroidal support 10. In this case as well, concurrently with the pressing step following admission of pressurized fluid, an expansion of tyre 7 increasing volume of the diffusion interspace 18 can be achieved.

Preferably, the diffusion interspace 18 has a size included between 3 mm and 14 mm, measured between the inner surface 7b of tyre 7 and the outer surface 10a of the toroidal support 10, at least close to an equatorial plane X-X of the tyre itself.

It is also preferably provided that the amount of the expansion imposed to tyre 7 should involve an increase in the circumference of same which is included between 1.5% and 3.5%, measured at the equatorial plane X-X of the tyre itself.

The fluid under pressure admitted to the diffusion interspace 18 can be made up of nitrogen or another inert gas, for example.

However, in a preferential solution, it is provided that, in addition to or in place of an inert gas, preferably overheated steam should be employed, which will preferably have a temperature included between 170°C and 210°C, and will be fed at a gradually increasing pressure until a value included between 16 and 30 bars, preferably of about 18 bars. Under this circumstance the heating fluid is made of, or at least comprises, the same fluid under pressure sent to the feeding channels 17, for tyre moulding.

Said primary duct 13 and connecting duct 14, as well as the radial branches 15, annular chamber 16 and feeding channels 17, together with further conduits 19, 20 close to cheeks 4a, 4b and sectors 5a, 5b of mould 8 fed with steam under pressure at high temperature, also perform the function of heating means for the mould walls in order to supply tyre 7, from the outside to the inside, with heat necessary for its molecular cross-linking.

In accordance with a further aspect of the invention, in order to inhibit steam under pressure, during the starting steps of the curing cycle, from permeating through the raw elastomer material of which tyre 7 is made, the method in reference provides for arrangement of at least one pre-vulcanized liner on the inner surface of the tyre. Advantageously, the pre-vulcanized liner (not shown in the drawings) can be directly formed on the toroidal support 10 during a step preceding manufacturing of tyre 7 on the toroidal support itself, or applied to the outer surface 10a of the toroidal support 10 in the form of a skim coat.

Further specifications on the composition and features of the liner are described in a copending European patent application in the name of the same Applicant, to which please refer for further explanations.

The invention achieves important advantages.

In fact, the possibility of directly manufacturing the tyre on a rigid toroidal support ensures high qualities in terms of geometric accuracy and structural uniformity of the tyre itself.

Employment of a rigid toroidal support during the moulding and curing steps enables a perfect centering of the tyre within the vulcanization mould to be achieved, and allows a greater control on the geometric and structural features or the tyre during the expansion step, as compared with traditional processes using inflatable vulcanization bladders. This geometric and structural control is also assisted by an efficient anchoring of beads 8a between the cheeks 4a, 4b and the toroidal support 10, as previously described, without any risk of forming burr due to escape of elastomer material therethrough.

In addition, admission of steam under pressure and at temperature to the diffusion interspace formed between the toroidal support and the inner surface of the tyre, ensures a greater heat transmission to the tyre itself, which is not hindered by bodies of elastomer material such as the vulcanization bladders of the known art, and is more efficient than that obtainable by contact with solid bodies such as the toroidal support itself.

It is also to note that, due to the presence of the toroidal support, the volume taken up by steam within the tyre is very reduced. Consequently, vulcanization can be obtained with greatly reduced amounts of steam as compared with the known art.

Admission of steam or another fluid under pressure between the toroidal support and the inner surface of the tyre further enables, with a possible tyre expansion, convenient preloading forces to be produced in the inner tyre-reinforcing structures, which condition is often sought for achieving given behavioural qualities.

In addition, arrangement of a pre-vulcanized elastomer layer on the inner surface of the tyre eliminates the risk that the direct contact of steam with the inner surfaces of the tyre may cause diffusion of water particles into the layers of the raw blend, above all in the starting steps of the curing process.

This solution can be also advantageously utilized in any curing process carried out without the aid of a vulcanization bladder, even in the absence of the toroidal support.

## Claims

1. A method of moulding and curing tyres for vehicle wheels, comprising the following steps:
- disposing a tyre being worked (7) on a toroidal support (10)
- closing the tyre (7) and the toroidal support (10) in a moulding cavity (6) defined by a vulcanization mould, said moulding cavity having walls conforming in shape to an outer surface (7a) of the tyre (7) when vulcanization has been completed;
- pressing the tyre (7) with its outer surface (7a) against the moulding cavity (6) walls by admission of a fluid under pressure to at least one fluid-diffusion interspace (18) created between the outer surface (10a) of the toroidal support (10) and the inner surface (7b) of the tyre (7);
- administering heat to the tyre being worked (7) in order to cause a molecular cross-linking of same,
**characterized in that**
the step of arranging the tyre (7) on the toroidal support (10) is carried out by directly manufacturing the tyre on the toroidal support; the latter having a rigid outer surface (10a) the shape of which substantially matches that of an inner surface (7b) exhibited by the unvulcanized tyre before the pressing step;
wherein said pressing step takes place concurrently with an expansion imposed to the tyre (7) by effect of admitting fluid under pressure to the diffusion interspace (18).

2. method as claimed in claim 1, wherein said diffusion interspace (18) is created following expansion of the tyre (7).

3. A method as claimed in claim 1, wherein admission of fluid under pressure takes place through feeding channels (17) formed in the toroidal support (10) and opening onto the outer surface (10a) of said support.

4. A method as claimed in claim 1, wherein during admission of fluid under pressure the tyre is sealingly engaged at its inner circumferential edges (8a) between the moulding cavity (6) walls and the outer surface (10a) of the toroidal support (10), for hermetically delimiting the diffusion interspace (18) at the inner circumferential edges (8a) of the tyre itself.

5. A method as claimed in claim 1, wherein heat administration takes place by admission of a heating fluid to said diffusion interspace (18).

6. A method as claimed in claim 5, wherein said heating fluid comprises the same fluid under pressure as employed for carrying out the pressing step.

7. A method as claimed in claim 1, wherein said diffusion interspace (18) has a size included between 3 mm and 14 mm, measured between the inner surface (7b) of the tyre (7) and the outer surface (10a) of the toroidal support (10) at least at one equatorial plane (X-X) of the tyre itself.

8. A method as claimed in claim 1, wherein the radial-expansion step involves an increase in the tyre circumference included between 1.5% and 3.5% measured at an equatorial plane (X-X) of the tyre itself.

9. A method as claimed in claim 1, wherein a pre-vulcanized liner is arranged on the inner surface of the tyre (7).

10. A method as claimed in claim 9, wherein said pre-vulcanized liner is directly formed on the toroidal support (10) during a preliminary manufacturing step of the tyre (7) on the toroidal support itself.

11. An apparatus for moulding and curing tyres for vehicle wheels, comprising:
- a toroidal support (10) arranged to engage a tyre being worked (7),
- a vulcanization mould (2) arranged to receive the toroidal support (10) carrying the tyre being worked (7) within a moulding cavity (6) having walls conforming in shape to an outer surface (7a) of the tyre (7) when vulcanization has been completed;
- pressing means for pressing the outer surface (7a) of the tyre (7) against the moulding cavity (6) walls, said pressing means comprising channels (17) for feeding of fluid under pressure which are formed through the toroidal support (10) and open onto the outer surface (10a) of said support (10);
- heating means for transmitting heat to the tyre (7) closed between the moulding cavity (6) and the toroidal support (10),
**characterized in that**:
- said toroidal support (10) has a rigid outer surface (10a) the shape of which substantially matches that of an inner surface (7b) exhibited by the unvulcanized tyre;

12. An apparatus as claimed in claim 11, wherein said feeding channels (17) open into at least one interspace (18) for diffusion of the fluid under pressure, defined between the outer surface (10a) of the toroidal support (10) and the inner surface (7b) of the tyre being worked (7).

13. An apparatus as claimed in claim 11, wherein the outer surface (10a) of the toroidal support (10) has an extension lower than that of the inner surface (7b) of the vulcanized tyre (7), so that an interspace (18) for diffusion of the heating fluid is created between the outer surface of the toroidal support (10) and the inner surface (7b) of the tyre (7).

14. An apparatus as claimed in claim 11, wherein the toroidal support (10) has inner circumferential portions cooperating with inner circumferential portions of the walls of the moulding cavity (6) for sealingly engaging the tyre (7) at the respective inner circumferential edges (8a) of the latter.

15. An apparatus as claimed in claim 11, wherein said pressurized-fluid feeding channels (17) extend from an annular cavity (16) provided internally of the toroidal support (10) and susceptible of connection with a primary duct (13) associated with the vulcanization mould (2), for feeding of fluid under pressure.

16. An apparatus as claimed in claim 11, wherein said toroidal support (10) has at least one centering shank (11) to be engaged in a centering seat (12) associated with the mould for fastening positioning of the toroidal support (10) and the tyre (7) in the moulding cavity (6).

17. An apparatus as claimed in claim 16, wherein said centering shank (11) extends in a geometric axis common to said toroidal support (10), said tyre being worked (7) and said moulding cavity (6).

18. An apparatus as claimed in claim 16, further comprising at least one connecting duct (14) formed along the centering shank (11) to bring the feeding channels (17) into fluid communication with said primary duct (13) for feeding of fluid under pressure.

19. An apparatus as claimed in claim 11, wherein said heating means comprises at least one conduit (13) for sending a heating fluid to the feeding channels (17).

20. An apparatus as claimed in claim 11, wherein said heating fluid comprises the same fluid under pressure admitted by the pressurised-fluid feeding means (13-18).

21. An apparatus as claimed in claim 11, wherein said toroidal support (10) has an elastically yielding structure in an axial direction, at least at regions corresponding to inner circumferential edges (8a) of the tyre (7).

## Patentansprüche

1. Verfahren zum Formen und Vulkanisieren von Reifen für Fahrzeugräder, welches die folgenden Schritte aufweist:
- Anordnen eines herzustellenden Reifens (7) auf einem torusförmigen Träger (10),
- Einschließen des Reifens (7) und des torusförmigen Trägers (10) in einen Formhohlraum (6), der von einer Vulkanisierform gebildet wird, wobei der Formhohlraum Wände hat, die in ihrer Form der Außenfläche (7a) des Reifens (7) entsprechen, wenn die Vulkanisierung abgeschlossen ist,
- Pressen des Reifens (7) mit seiner Außenfläche (7a) gegen die Wände des Formhohlraums (6) durch Zuführung eines Druckfluids zu wenigstens einem Fluiddiffusionszwischenraum (18), der zwischen der Außenfläche (10a) des torusförmigen Trägers (10) und der Innenfläche (7b) des Reifens (7) geschaffen wird,
- Applizieren von Wärme auf den herzustellenden Reifen (7), um seine molekulare Vernetzung herbeizuführen,
**dadurch gekennzeichnet,**
- **dass** der Schritt des Anordnens des Reifens (7) auf dem torusförmigen Träger (10) durch direkte Herstellung des Reifens auf dem torusförmigen Träger ausgeführt wird,
- wobei letzterer eine starre Außenfläche (10a) hat, deren Form im Wesentlichen der einer Innenfläche (7b) entspricht, die von dem unvulkanisierten Reifen vor dem Pressschritt gebildet wird,
- wobei der Pressschritt gleichzeitig mit einer Expansion erfolgt, die auf dem Reifen (7) durch die Wirkung ausgeübt wird, dass dem Diffusionszwischenraum (18) ein Druckfluid zugeführt wird.

2. Verfahren nach Anspruch 1, bei welchem der Diffusionszwischenraum (18) auf die Expansion des Reifens (7) folgend geschaffen wird.

3. Verfahren nach Anspruch 1, bei welchem die Zuführung von Druckfluid durch Zuführkanäle (17) erfolgt, die in dem torusförmigen Träger (10) ausgebildet sind und auf der Außenfläche (10a) des Trägers münden.

4. Verfahren nach Anspruch 1, bei welchem während des Zuführens des Druckfluids der Reifen dichtend an seinen inneren Umfangsrändem (8a) zwischen den Wänden des Formhohlraums (6) und der Außenfläche (10a) des torusförmigen Trägers (10) in Eingriff gehalten wird, um den Diffusionszwischenraum (18) an den inneren Umfangsrändern (8a) des Reifens selbst hermetisch zu begrenzen.

5. Verfahren nach Anspruch 1, bei welchem die Wärmeapplizierung durch Zuführung eines Heizfluids zu dem Diffusionszwischenraum (18) durchgeführt wird.

6. Verfahren nach Anspruch 5, bei welchem das Heizfluid das gleiche Druckfluid aufweist, wie es zur Ausführung des Pressschritts verwendet wird.

7. Verfahren nach Anspruch 1, bei welchem der Diffusionszwischenraum (18) eine Gröβe zwischen 3 mm und 14 mm gemessen zwischen der Innenfläche (7b) des Reifens (7) und der Außenfläche (10a) des torusförmigen Trägers (10) wenigstens an einer Äquatorialebene X-X des Reifens selbst hat.

8. Verfahren nach Anspruch 1, bei welchem der Radialexpansionsschritt eine Zunahme im Reifenumfang zwischen 1,5 % und 3,5 % gemessen an einer Äquatorialebene X-X des Reifens selbst aufweist.

9. Verfahren nach Anspruch 1, bei welchem eine vorvulkanisierte Auskleidung an der Innenfläche des Reifens (7) angeordnet ist.

10. Verfahren nach Anspruch 9, bei welchem die vorvulkanisierte Auskleidung direkt auf dem torusförmigen Träger (10) während eines Vorfertigungsschritt des Reifens (7) auf dem torusförmgen Träger selbst ausgebildet wird.

11. Vorrichtung zum Formen und Vulkanisieren von Reifen für Fahrzeugräder
- mit einem torusförmigen Träger (10), der für einen Eingriff mit dem herzustellenden Reifen (7) angeordnet ist,
- mit einer Vulkanisierform (2), die so angeordnet ist, dass sie den den herzustellenden Reifen (7) tragenden torusförmigen Träger (10) in einem Formhohlraum (6) aufnimmt, der Wände hat, die in der Form einer Außenfläche (7a) des Reifens (7) entsprechen, wenn die Vulkanisierung abgeschlossen worden ist,
- mit Presseinrichtungen zum Pressen der Außenfläche (7a) des Reifens (7) gegen die Wände des Formhohlraums (6), wobei die Presseinrichtungen für die Zuführung eines Druckfluids Kanäle (17) aufweisen, die durch den rohrförmigen Träger (10) hindurchgehend ausgebildet sind und auf der Außenfläche (10a) des Trägers (10) münden,
- mit Heizeinrichtungen zum Überführen von Wärme auf den Reifen (7), der zwischen dem Formhohlraum (6) und dem torusförmigen Träger (10) eingeschlossen ist,
**dadurch gekennzeichnet,**
- **dass** der rohrförmige Träger (10) eine starre Außenfläche (10a) hat, deren Form im Wesentlichen der einer Innenfläche (7b) entspricht, die der unvulkanisierte Reifen hat.

12. Vorrichtung nach Anspruch 11, bei welcher die Zurührungskanäle (17) in wenigstens einen Zwischenraum (18) für eine Diffusion von Druckfluid münden, der zwischen der Außenfläche (10a) des torusförmigen Trägers (10) und der Innenfläche (7b) des herzustellenden Reifens (7) gebildet wird.

13. Vorrichtung nach Anspruch 11, bei welcher die Außenfläche (10a) des torusförmigen Trägers (10) eine Erstreckung hat, die kleiner ist als die der Innenfläche (7b) des vulkanisierten Reifens (7), so dass ein Zwischenraum (18) für eine Diffusion des Heizfluids zwischen der Außenfläche des torusförmigen Trägers (10) und der Innenfläche (7b) des Reifens (7) geschaffen wird.

14. Vorrichtung nach Anspruch 11, bei welcher der torusförmige Träger (10) innere Umfangsabschnitte aufweist, die mit den inneren Umfangsabschnitten der Wände des Formhohlraums (6) für einen abdichtenden Eingriff mit dem Reifen (7) an dessen jeweiligen inneren Umfangsrändern (8a) zusammenwirken.

15. Vorrichtung nach Anspruch 11, bei welcher sich die Zuführkanäle (17) für das Druckfluid von einem ringförmigen Hohlraum (16) aus erstrecken, der innerhalb des torusförmigen Trägers (10) vorgesehen und für eine Verbindung mit einer Primärleitung (13) geeignet ist, die der Vulkanisierform (2) zugeordnet ist, um das Druckfluid zuzuführen.

16. Vorrichtung nach Anspruch 11, bei welcher der torusförmige Träger (10) wenigstens einen Zentrierschaft (11) für den Eingriff in einen Zentriersitz (12) hat, der der Form zum Festlegen der Positionierung des torusförmigen Trägers (10) und des Reifens (7) in dem Formhohlaum (6) zugeordnet ist.

17. Vorrichtung nach Anspruch 16, bei welcher sich der Zentrierschaft (11) auf einer geometrischen Achse erstreckt, die der des torusförmigen Trägers (10) des herzustellenden Reifens (7) und des Formhohlraums (6) entspricht.

18. Vorrichtung nach Anspruch 16, welche weiterhin wenigstens eine Verbindungsleitung (14) aufweist, die längs des Zentrierschafts (11) ausgebildet ist, um die Zuführkanäle (17) in Fluidverbindung mit der Primärleitung (13) für die Zuführung des Druckfluids zu bringen.

19. Vorrichtung nach Anspruch 11, bei welcher die Heizeinrichtungen wenigstens eine Leitung (13) zum Zuführen eines Heizfluids zu den Zuführkanälen (17) aufweisen.

20. Vorrichtung nach Anspruch 11, bei welcher das Heizfluid das gleiche Druckfluid aufweist, das durch die Zurühreinrichtungen (13 bis 18) für das Druckfluid zugeführt wird.

21. Vorrichtung nach Anspruch 11, bei welcher der torusförmige Träger (10) einen in einer Axialrichtung wenigstens an Bereichen, die den inneren Umfangsrändern (8a) des Reifens (7) entsprechen, einen elastische nachgebenden Aufbau hat.

## Revendications

1. Procédé de moulage et de vulcanisation de pneus pour roues de véhicule, comprenant les étapes consistant à :
- placer un pneu en cours de traitement (7) sur un support toroïdal (10) ;
- fermer le pneu (7) et le support toroïdal (10) dans une cavité de moulage (6) définie par un moule de vulcanisation, ladite cavité de moulage ayant des parois dont la forme se conforme à une surface extérieure (7a) du pneu (7) quand la vulcanisation est terminée ;
- presser le pneu (7) avec sa surface extérieure (7a) contre les parois de la cavité de moulage (6) par admission d'un fluide sous pression dans au moins un interstice (18) de diffusion de fluide créé entre la surface extérieure (10a) du support toroïdal (10) et la surface intérieure (7b) du pneu (7) ;
- soumettre le pneu en cours de traitement (7) à l'action de la chaleur afin de provoquer une réticulation moléculaire,
**caractérisé en ce que**
l'étape consistant à placer le pneu (7) sur le support toroïdal (10) est exécutée en fabriquant directement le pneu sur le support toroïdal, ce dernier ayant une surface extérieure rigide (10a) dont la forme s'adapte sensiblement à celle de la surface intérieure (7b) que présente le pneu non vulcanisé avant l'étape de pressage ;
ladite étape de pressage ayant lieu simultanément à une dilatation imposée au pneu (7) par l'effet de l'admission de fluide sous pression dans l'interstice de diffusion (18).

2. Procédé selon la revendication 1, dans lequel ledit interstice de diffusion (18) est créé suite à la dilatation du pneu (7).

3. Procédé selon la revendication 1, dans lequel l'admission de fluide sous pression se fait par des canaux d'arrivée (17) formés dans le support toroïdal (10) et débouchant à la surface extérieure (10a) dudit support.

4. Procédé selon la revendication 1, dans lequel pendant l'admission de fluide sous pression, le pneu est pris de manière étanche au niveau de ses bords circonférentiels intérieurs (8a) entre les parois de la cavité de moulage (6) et la surface extérieure (10a) du support toroïdal (10), pour délimiter hermétiquement l'interstice de diffusion (18) au niveau des bords circonférentiels intérieurs (8a) du pneu lui-même.

5. Procédé selon la revendication 1, dans lequel l'application de chaleur se fait par admission d'un fluide chauffant dans ledit interstice de diffusion (18).

6. Procédé selon la revendication 5, dans lequel ledit fluide chauffant comprend le même fluide sous pression que celui employé pour exécuter l'étape de pressage.

7. Procédé selon la revendication 1, dans lequel ledit interstice de diffusion (18) a une taille comprise entre 3 mm et 14 mm, mesurée entre la surface intérieure (7b) du pneu (7) et la surface extérieure (10a) du support toroïdal (10) au moins au niveau d'un plan équatorial (X-X) du pneu lui-même.

8. Procédé selon la revendication 1, dans lequel l'étape de dilatation radiale implique une augmentation de la circonférence du pneu comprise entre 1,5 % et 3,5 %, mesurée au niveau d'un plan équatorial (X-X) du pneu lui-même.

9. Procédé selon la revendication 1, dans lequel une garniture pré-vulcanisée est placée sur la surface intérieure du pneu (7).

10. Procédé selon la revendication 9, dans lequel ladite garniture pré-vulcanisée est formée directement sur le support toroïdal (10) au cours d'une étape de fabrication préliminaire du pneu (7) sur le support toroïdal lui-même.

11. Dispositif pour le moulage et la vulcanisation de pneus pour roues de véhicule, comprenant :
- un support toroïdal (10) adapté pour coopérer avec un pneu en cours de traitement (7) ;
- un moule de vulcanisation (2) adapté pour recevoir le support toroïdal (10) supportant le pneu en cours de traitement (7) dans une cavité de moulage (6) ayant des parois dont la forme se conforme à une surface extérieure (7a) du pneu (7) quand la vulcanisation est terminée ;
- un moyen de pressage pour presser la surface extérieure (7a) du pneu (7) contre les parois de la cavité de moulage (6), ledit moyen de pressage comprenant des canaux (17) pour l'arrivée d'un fluide sous pression qui sont formés à travers le support toroïdal (10) et débouchent à la surface extérieure (10a) dudit support (10);
- un moyen de chauffage pour transmettre de la chaleur au pneu (7) fermé entre la cavité de moulage (6) et le support toroïdal (10),
**caractérisé en ce que**
ledit support toroïdal (10) a une surface extérieure rigide (10a) dont la forme s'adapte sensiblement à celle de la surface intérieure (7b) que présente le pneu non vulcanisé.

12. Dispositif selon la revendication 11, dans lequel lesdits canaux d'arrivée (17) débouchent dans au moins un interstice (18) servant à la diffusion du fluide sous pression, défini entre la surface extérieure (10a) du support toroïdal (10) et la surface intérieure (7b) du pneu en cours de traitement (7).

13. Dispositif selon la revendication 11, dans lequel la surface extérieure (10a) du support toroïdal (10) a une étendue plus basse que celle de la surface intérieure (7b) du pneu vulcanisé (7), de sorte qu'un interstice (18) pour la diffusion du fluide chauffant est créé entre la surface extérieure du support toroïdal (10) et la surface intérieure (7b) du pneu (7).

14. Dispositif selon la revendication 11, dans lequel le support toroïdal (10) a des parties circonférentielles intérieures qui coopèrent avec des parties circonférentielles intérieures des parois de la cavité de moulage (6) pour engager le pneu (7) de manière étanche au niveau des bords circonférentiels intérieurs respectifs (8a) de ce dernier.

15. Dispositif selon la revendication 11, dans lequel lesdits canaux d'arrivée (17) de fluide sous pression s'étendent depuis une cavité annulaire (16) prévue à l'intérieur du support toroïdal (10) et apte à la connexion avec une conduite primaire (13) associée au moule de vulcanisation (2), pour l'alimentation en fluide sous pression.

16. Dispositif selon la revendication 11, dans lequel ledit support toroïdal (10) comporte au moins une tige de centrage (11) destinée à être engagée dans un siège de centrage (12) associé au moule pour fixer le positionnement du support toroïdal (10) et du pneu (7) dans la cavité de moulage (6).

17. Dispositif selon la revendication 16, dans lequel ladite tige de centrage (11) s'étend sur un axe géométrique commun audit support toroïdal (10), audit pneu en cours de traitement (7) et à ladite cavité de moulage (6).

18. Dispositif selon la revendication 16, comprenant en outre au moins une conduite de connexion (14) formée le long de la tige de centrage (11) pour mettre les canaux d'arrivée (17) en communication de fluide avec ladite conduite primaire (13) pour l'alimentation en fluide sous pression.

19. Dispositif selon la revendication 11, dans lequel ledit moyen de chauffage comprend au moins un conduit (13) pour envoyer un fluide chauffant dans les canaux d'arrivée (17).

20. Dispositif selon la revendication 11, dans lequel ledit fluide chauffant comprend le même fluide sous pression admis par les moyens d'alimentation (13-18) en fluide sous pression.

21. Dispositif selon la revendication 11, dans lequel ledit support toroïdal (10) comporte, dans une direction axiale, une structure cédant de manière élastique, au moins dans des régions correspondant aux bords circonférentiels intérieurs (8a) du pneu (7).
